## Europäisches Patentamt

## European Patent Office

## Office européen des brevets

(19)

(11) Veröffentlichungsnummer : **0 265 644 B1**

(12) # EUROPÄISCHE PATENTSCHRIFT

(45) Veröffentlichungstag der Patentschrift :
02.01.91 Patentblatt 91/01

(51) Int. Cl.⁵ : **B30B 7/02, F16J 15/46**

(21) Anmeldenummer : **87113370.8**

(22) Anmeldetag : **12.09.87**

(54) **Heizpresse zum Verpressen von technischen Laminaten.**

(30) Priorität : **28.10.86 DE 3636600**

(43) Veröffentlichungstag der Anmeldung :
**04.05.88 Patentblatt 88/18**

(45) Bekanntmachung des Hinweises auf die
Patenterteilung :
**02.01.91 Patentblatt 91/01**

(84) Benannte Vertragsstaaten :
**AT CH DE ES FR GB IT LI NL SE**

(56) Entgegenhaltungen :
**EP-A- 0 179 722**
**CH-A- 495 209**
**US-A- 3 788 651**
**US-A- 4 154 272**
**US-A- 4 396 451**

(73) Patentinhaber : **Hoesch Maschinenfabrik**
**Deutschland Aktiengesellschaft**
**Borsigstrasse 22**
**D-4600 Dortmund 1 (DE)**

(72) Erfinder : **Breiter, Horst, Dipl.-Ing.**
**In den Hüchten 6**
**D-4600 Dortmund 16 (DE)**
Erfinder : **Enger, Helmut**
**Bruchhecke 33**
**D-4150 Krefeld 12 (DE)**
Erfinder : **Teuwen, Uwe**
**Zechenstrasse 34**
**D-4703 Bönen (DE)**

## Beschreibung

Die Erfindung bezieht sich auf eine Heizpresse zum Verpressen von technischen Laminaten zu einschichtigen Preßstofftafeln, mit mindestens einer Heizplatte und mindestens einer Preßetage, wobei jeder Preßetage eine Abdichtungsvorrichtung zugeordnet ist, die in einem Bereich des Preßhubs ein Verpressen der Laminate unter Vakuum ermöglicht, wobei die Abdichtungsvorrichtung an der oberen Preßfläche der Preßetage befestigt und mit einem mit Druckluft beaufschlagbaren Schlauch ausgeführt ist und wobei eine der beiden gegenüberliegenden Dichtungsseiten des Schlauches ein Loch für die Druckluftteinspeisung und Luftabsaugung enthält.

Eine Heizpresse der vorgenannten Art ist durch das Dokument US-A4 396 451 bekannt.

Bei einer solchen Heizpresse ist jede Abdichtungsvorrichtung mit einem Schlauch und einer an der oberen Preßfläche der Preßetage befestigten Schlauchhalterung ausgeführt. Hierbei wird als nachteilig empfunden, daß der Vakuumaufbau in dem Preßraum einer Preßetage durch Undichtigkeiten zwischen der oberen Preßfläche und der Schlauchhalterung einerseits sowie zwischen der unteren Preßfläche und dem Schlauch andererseits ungünstig beeinflußt wird.

Der Erfindung liegt die Aufgabe zugrunde, eine Abdichtungsvorrichtung für eine Heizpresse der eingangs genannten Art zu schaffen, mit der während des Verpressens der Laminate unter Vakuum eine bessere Abdichtung des preßraumes einer preßetage erreicht wird.

Erfindungsgemäß wird diese Aufgabe dadurch gelöst, daß der Schlauch einen mit der oberen Preßfläche der preßetage fest verbindbaren Steg und mehrere auf die untere Preßfläche der preßetage drückbare Dichtungslippen aufweist.

Eine vorteilhafte Ausführungsform sieht vor, den Steg T-förmig auszubilden.

Im folgenden wird die Erfindung anhand einer Zeichnung, in der ein Ausführungsbeispiel schematisch dargestellt ist, näher beschrieben.

Es Zeigt

Fig. 1 einen Teilschnitt durch eine Heizpresse nach dem Beschickvorgang,

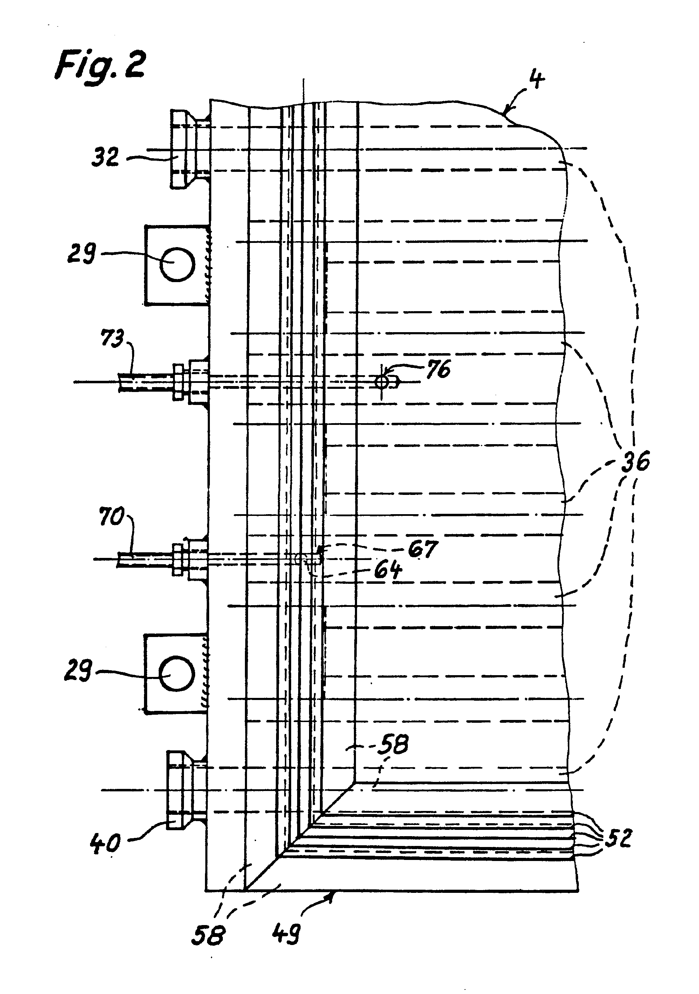

Fig. 2 eine Teilansicht der Heizpresse in Richtung des Pfeiles A in Fig. 1,

Fig. 3 einen Teilschnitt durch die Heizpresse nach dem Preßvorgang,

Fig. 4 einen Teilschnitt durch die Heizpresse nach einem anderen Preßvorgang.

Eine Heizpresse 1 enthält eine feste (2) und eine verschiebbare Pres-sentraverse 3 sowie vier Heizplatten 4, 5, 6, 7.

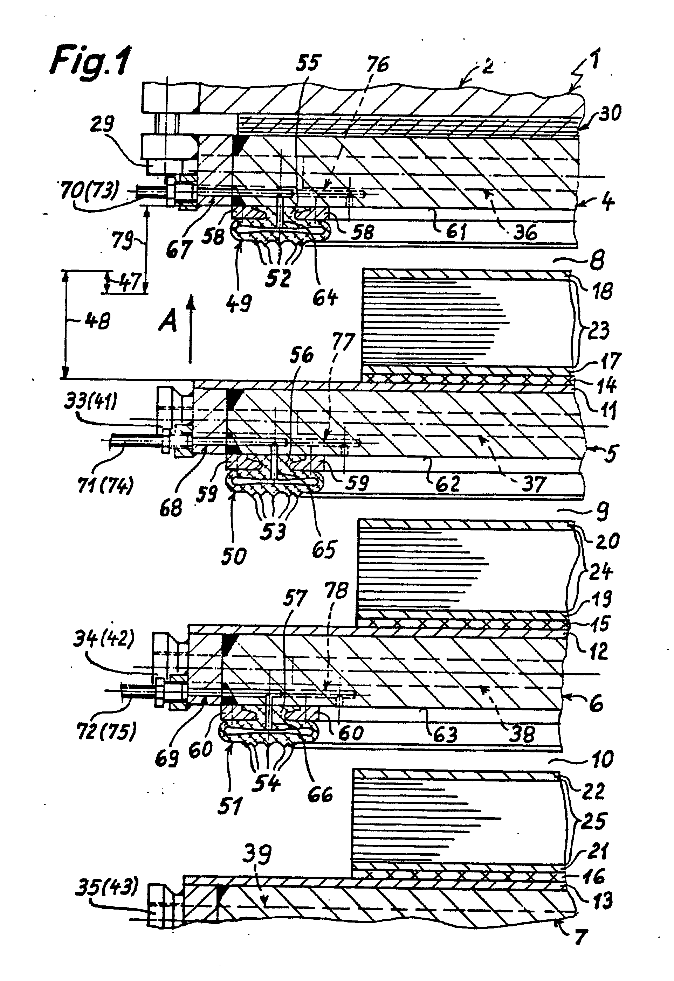

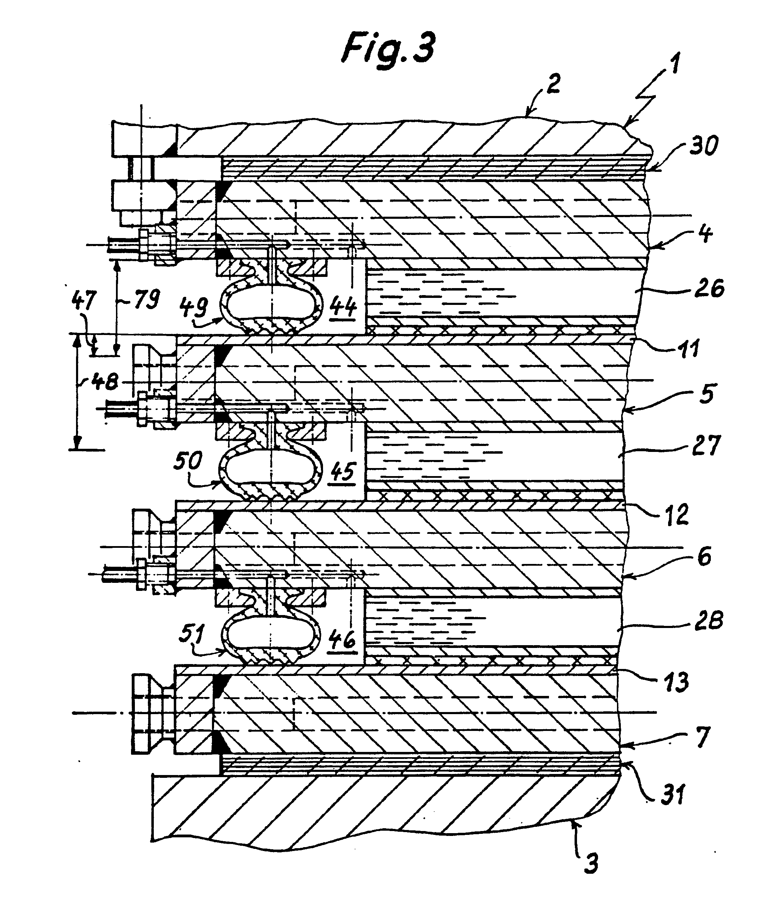

Die vier Heizplatten 4 bis 7 bilden drei Preßetagen 8, 9, 10, in denen jeweils auf einem Beschickblech 11, 12, 13 und einem Preßpolster 14, 15, 16 zwischen zwei Preßblechen 17, 18, 19, 20, 21, 22 gestapelte Laminate 23, 24, 25 (Fig. 1) zu einer Preßstofftafel 26, 27, 28 (Fig. 3) verpreßt werden.

Die heizplatte 4 ist mittels Kopfschrauben 29 an die feste Pressentraverse 2 angeschraubt. Mit 30 ist die Isolierung zwischen der Heizplatte 4 und der festen Pressentraverse 2, mit 31 die Isolierung zwischen der Heizplatte 7 und der verschiebbaren Pressentraverse 3 bezeichnet.

Bie geöffneter Heizpresse 1 (Fig. 1) werden die Heizplatten 5, 6 durch ortsfeste Stützelemente (nicht dargestellt) gehalten.

Zum Antrieb der Heizpresse 1 werden mehrere Preßzylinder (nicht dargestellt) benutzt, deren Preßhub direkt auf die verschiebbare Pressentraverse 3 übertragen wird.

Jede Heizplatte 4 bis 7 besitzt zur Führung eines Heizmittels einen Einlaßstutzen 32, 33, 34, 35, ein Heizkanalsystem 36, 37, 38, 39 und einen Auslaßstutzen 40, 41, 42, 43.

Zur Abdichtung eines jeden Preßraumes 44, 45, 46 in einem Bereich 47 des Preßhubs 48 ist ein elastischer Schlauch 49, 50, 51 aus Silikonkautschuk vorgesehen, der mehrere Dichtungslippen 52, 53, 54 und einen T-förmigen Steg 55, 56, 57 enthält. Jeder Steg 55 bis 57 eines Schlauches 49 bis 51 ist über angeschraubte Spannleisten 58, 59, 60 mit der oberen Preßfläche 61, 62, 63 einer Preßetage 8, 9, 10 fest verbunden.

Die Schläuche 49 bis 51 enthalten jeweils mehrere Löcher 64, 65, 66 die über ein Kanalsystem 67, 68, 69 mit Leitungsschläuchen 70, 71, 72 in Verbindung stehen.

Die Leitungsschläuche 70 bis 72 sind während des Beschickvorganges mit einer Vakuumanlage (nicht dargestellt) und während des Preßvorganges mit einem Preßluftspeicher (nicht dargestellt) verbunden.

Die Vakuumanlage ist stets mit den Preßräumen 44 bis 46 verbunden, und zwar über die Schlauchleitungen 73, 74, 75 und die Kanalsysteme 76, 77, 78.

Während des Beschickvorganges sind die Schläuche 49 bis 51 unter Vakuum gesetzt, wodurch diese die in Fig. 1 dargestellte Form annehmen.

Nach dem Beschickvorgang werden die Schläuche 49 bis 51 mittels Preßlauft auf eine Höhe 79 aufgeblasen.

Beim Verpressen der Laminate 23 bis 25 zu einschichtigen Preßstofftafeln 26 bis 28 werden die aufgeblasenen Schläuche 49 bis 51 im Bereich 47 des Preßhubs 48 etwas verformt (Fig. 3). Dabei wird ein Teil der in den Schläuchen 49 bis 51 befindlichen Preßluft in den Preßluftspeicher zurückgedrückt.

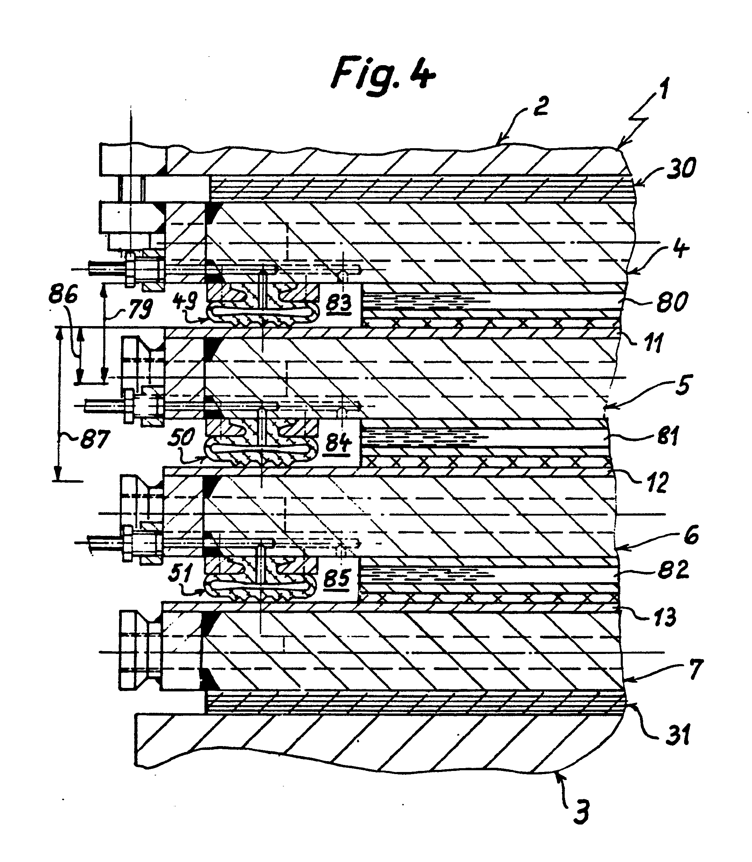

Der Anteil der in den Preßluftspeicher zurückgedrückten Preßluft ist besonders hoch, wenn die Heizpresse 1 gestapelte Laminate zu dünnen Preßstofftafeln 80, 81, 82 verpreßt (Fig. 4). Die Abdichtung der Preßräume 83, 84, 85 erfolgt hierbei in einem Bereich 86 des Preßhubs 87.

## Ansprüche

1. Heizpresse zum Verpressen von technischen Laminaten (23, 24, 25) zu einschichtigen preßstofftafeln (80, 81, 82), mit mindestens einer Heizplatte (4, 5, 6, 7) und mindestens einer preßetage (8, 9, 10), wobei jeder preßetage (8, 9, 10) eine Abdichtungsvorrichtung zugeordnet ist, die in einem Bereich (47, 86) des Preßhubs (48, 87) ein Verpressen der Laminate (23, 24, 25) unter Vakuum ermöglicht, wobei die Abdichtungsvorrichtung an der oberen Preßfläche (61, 62, 63) der preßetage (8, 9, 10) befestigt und mit einem mit Druckluft beaufschlagbaren Schlauch (49, 50, 51) ausgeführt ist und wobei eine der beiden gegenüberliegenden Dichtungsseiten des Schlauches (49, 50, 51) ein Loch (64, 65, 66) für die Drucklufteinspeisung und Luftabsaugung enthält, <u>dadurch gekennzeichnet,</u> daß der Schlauch (49, 50, 51) einen mit der oberen preßfläche (61, 62, 63) der preßetage (8, 9, 10) fest verbindbaren Steg (55, 56, 57) und mehrere auf die untere Preßfläche der preßetage (8, 9, 10) drückbare Dichtungslippen (52, 53, 54) aufweist,

2. Heizpresse nach Anspruch 1, dadurch gekennzeichnet, daß der Steg (55, 56, 57) T-förmig ausgebildet ist.

## Revendications

1. Presse à chaud pour presser des agglomérés techniques (23, 24, 25) en panneaux de matière comprimée à une couche (80, 81, 82), comportant au moins un plateau chauffant (4, 5, 6, 7) et au moins un étage de pressage (8, 9, 10), dans laquelle un dispositif d'étanchement est associé à chaque étage de pressage (8, 9, 10), dispositif d'étanchement qui permet de presser les agglomérés (23, 24, 25) sous vide dans un domaine (47, 86) de la course de la presse, dans laquelle le dispositif d'étanchement est fixé au plateau supérieur (61, 62, 63) de l'étage de pressage (8, 9, 10), et est réalisé sous la forme d'un tuyau souple (49, 50, 51) pouvant être alimenté par de l'air comprimé, et dans laquelle l'un des deux côtés d'étanchement opposés du tuyau souple (49, 50, 51) comprend un trou (64, 65, 66) pour l'amenée de l'air sous pression et l'évacuation de l'air, caractérisé en ce que le tuyau souple (49, 50, 51) présente un talon (55, 56, 57) prévu pour être fixé au plateau supérieur (61, 62, 63) de l'étage de pressage (8, 9, 10), et plusieurs lèvres d'étanchéité (52, 53, 54) pouvant être pressées sur le plateau inférieur de l'étage de pressage (8, 9, 10).

2. Presse à chaud selon les revendication 1, caractérisée en ce que le talon (55, 56, 57) est réalisé en T.

## Claims

1. Heating press for compressing technical laminates (23, 24, 25) to form single-layer panels (80, 81, 82) of pressed material, having at least one heating plate (4, 5, 6, 7) and at least one pressing tier (8, 9, 10), wherein each pressing tier (8, 9, 10) is associated with a sealing device, which in a region (47, 86) of the pressing stroke (48, 87) permits compression of the laminates (23, 24, 25) under vacuum, wherein the sealing device is secured to the upper pressing surface (61, 62, 63) of the pressing tier (8, 9, 10) and has a flexible tube (49, 50, 51) to which compressed air may be admitted, and wherein one of the two mutually oppositely located sealing ends of the tube (49, 50, 51) contains a hole (64, 65, 66) for feeding in the compressed air and drawing off air, characterised in that the flexible tube (49, 50, 51) has a connection member (55, 56, 57), which is fixedly connectable to the upper pressing surface (61, 62, 63) of the pressing tier (8, 9, 10), and a plurality of sealing lips (52, 53, 54), which can be pressed onto the lower pressing surface of the pressing tier (8, 9, 10).

2. Heating press as in claim 1, characterised in that the connection member (55, 56, 57) is T-shaped.

Fig.1

EP 0 265 644 B1

4

# Fig. 2

## Fig.3

## Fig. 4